# EUROPÄISCHE PATENTSCHRIFT

(11) **EP 2 289 659 B1**
(45) Veröffentlichungstag und Bekanntmachung des Hinweises auf die Patenterteilung: **17.07.2013**
(21) Anmeldenummer: 10172958.0
(22) Anmeldetag: 16.08.2010
(51) Int. Cl.: B23K 20/12, B29C 65/06, F16B 37/06

(54) **Vorrichtung zum Reibschweissverbinden von mindestens zwei Platten durch ein Verbindungselement mit einer Einrichtung zum Messen der ausgeübten Kraft und der Vorschublänge während des Verbindens**
Apparatus for frictionally connecting at least two plates through a connecting element with a system for measuring the applied load and the advancing length during connection
Dispositif de liaison par friction d'au moins deux plaques au moyen d'un élément de liaison avec un système de mesure de l'effort appliqué et du déplacement durant la liaison

(30) Priorität: 24.08.2009 DE 102009038697
(43) Veröffentlichungstag der Anmeldung: 02.03.2011
(73) Patentinhaber: EJOT GmbH & Co. KG, 57334 Bad Laasphe (DE)
(72) Erfinder: Christ, Dr.-Ing. Eberhard, 99897 Tambach-Dietharz (DE); Thiem, Dipl.-Ing. Jörg, 98544 Zella-Mehlis (DE); Werkmeister, Marco, 99894 Leinatal/ OT Engelsbach (DE)
(74) Vertreter: Bardehle, Heinz

(56) Entgegenhaltungen:
- DE-A1- 19 620 814
- DE-A1-102004 034 498
- US-A- 3 477 115
- A. W. E. NENTWIG ET AL: "UNTERSUCHUNG ZUR ANWENDBARKEIT DES REIBBOLZENSCHWEISSENS", SCHWEISSEN UND SCHNEIDEN, DVS VERLAG, DUSSELDORF, DE, Bd. 46, Nr. 7, 1. Juli 1994 (1994-07-01), Seiten 319-324, XP000457270, ISSN: 0036-7184

## Beschreibung

Die Erfindung bezieht sich auf eine Vorrichtung zum Verbinden von mindestens zwei Platten, von denen eine tragende Platte eine höhere Festigkeit als eine darauf liegende, getragene Platte aufweist, mittels eines von einem Rotationsvorschub in Drehung versetzten Verbindungselementes, das mit einem Bund die getragene Platte an die tragende Platte drückt und mit einem Schaft eine Reibschweißverbindung zu der tragenden Platte herstellt (siehe Anspruch 1).

Für die Herstellung einer Reibschweißverbindung zwischen einem Bolzen und einer Platte hat man bereits gemäß der DE 10 2004 034 498 A1 eine Vorrichtung verwendet, durch die ein von einer Rotationsvorschubeinheit in Drehung versetzter Bolzen auf eine Platte mit einer derartigen Drehzahl und einem derartigen Druck gedrückt wird, dass durch die dabei auftretende Reibungserwärmung zwischen dem Bolzen und der Platte ein Aufschmelzen des Bolzens im Berührungsbereich mit der Platte und auch ein an dieser Stelle auftretendes Anschmelzen der Plattenoberfläche eintritt, womit der Vorgang des Reibschweißens eingeleitet ist, der durch eine schlagartige Verringerung der Reibung zwischen Bolzen und Platte und einen dadurch gegebenen Drehmomentabfall signalisiert, dass unter Aufrechterhaltung des Drucks des Bolzens auf die Platte und Abkühlung der Reibungsstelle der Reibschweißvorgang erfolgt ist. Die Vorrichtung ist hierzu mit einem Wegsensor, einem Drehmomentsensor und einem Presskraftsensor versehen, um mit diesen Daten eine Steuerung zu speisen, die dann aufgrund der Feststellung dieser Messdaten die Rotationsvorschubeinrichtung entsprechend steuert und zum Stillstand bringt, um der entstandenen Schmelze das Erstarren zu ermöglichen und damit die Reibschweißverbindung endgültig herzustellen.

Eine besondere derartige Reibschweißverbindung ist in der DE 196 20 814 A1 beschrieben und dargestellt. Bei der in dieser Druckschrift offenbarten Reibschweißverbindung handelt es sich um einen Dreikörperverbund, bestehend aus einem flächigen Metallteil und einer metallischen Unterlage, die über einen Verbindungskörper dadurch miteinander verbunden sind, dass der Verbindungskörper unter Rotation auf das flächige Metallteil gedrückt wird, dieses im Bereich des Verbindungskörpers zum Schmelzen bringt und zu der metallischen Unterlage vordringt, mit der sich der Verbindungskörper dann durch Reibschweißen verbindet. Über einen Kragen bzw. Bund des Verbindungskörpers drückt dieser auf das flächige Metallteil, wobei sein Schaft, der das flächige Metallteil durchdrungen hat, mit der metallischen Unterlage durch Reibschweißen verbunden ist, womit der Mehrkörperverbund über den Verbindungskörper fest zusammengehalten wird.

Um einen solchen Mehrkörperverbund herzustellen und dabei ein praktikables Verfahren anwenden zu können, ist es notwendig, in Abhängigkeit von den Materialien der zu verbindenden Platten den Verbindungskörper mit einem bestimmten Druck auf das flächige Metallteil aufzusetzen, um dessen Material zum Schmelzen zu bringen und dann auch in die metallische Unterlage einzudringen, wo eine Reibschweißverbindung entsteht. Die dabei jeweils einzuhaltenden Drehzahlen und Drücke werden normalerweise durch Versuche ermittelt, die dabei als optimal aufgefundenen Werte von Drehzahlverlauf und Druckverlauf während des eigentlichen Verbindungsvorganges werden dann im Betrieb eingehalten, damit eine ausreichend feste Reibschweißverbindung hergestellt werden kann.

Der Erfindung liegt die Aufgabe zugrunde, eine Vorrichtung zum Verbinden von mindestens zwei Platten über ein Verbindungselement zu schaffen, mit der wahlweise die jeweiligen Betriebsparameter, insbesondere Drehzahl, Vorschubweg und Vorschubdruck sich einstellen lassen, wobei dann auch auf unterschiedliche Materialen Rücksicht zu nehmen ist, da sich sowohl Metallplatten als auch Kunststoffplatten über einen Reibschweißvorgang fest miteinander verbinden lassen. In dem hier behandelten Fall der Verbindung von zwei Platten muss die tragende Platte eine höhere Festigkeit aufweisen als eine darauf liegende getragene Platte.

Gelöst wird das Problem mit der eingangs angegebenen Vorrichtung, die dadurch gekennzeichnet ist, dass die Rotationsvorschubeinheit mit einer Messeinrichtung versehen ist, die sowohl eine von der Rotationsvorschubeinheit ausgeübte Axialkraft als auch eine jeweilige Vorschublänge misst und die bei Aufsetzen des Schaftes des Verbindungselementes auf die getragene Platte den dabei auftretenden Druckanstieg signalisiert, der damit die Rotationsvorschubeinheit, deren Vorschub auf mindestens drei aufeinander folgende Verbindungsstufen einstellbar ist, fortschaltet, wobei die erste Stufe auf das Durchdringen der getragenen Platte, die zweite Stufe auf das Reibschweißen des Schaftes mit der tragenden Platte eingestellt ist und die dritte Stufe den Reibschweißvorgang durch eine Erhöhung der Axialkraft des Verbindungselementes auf die tragende Platte beendet.

Rotation auf das flächige Metallteil gedrückt wird, dieses im Bereich des Verbindungskörpers zum Schmelzen bringt und zu der metallischen Unterlage vordringt, mit der sich der Verbindungskörper dann durch Reibschweißen verbindet. Über einen Kragen bzw. Bund des Verbindungskörpers drückt dieser auf das flächige Metallteil, wobei sein Schaft, der das flächige Metallteil durchdrungen hat, mit der metallischen Unterlage durch Reibschweißen verbunden ist, womit der MehrkörpervErbund über den Verbindungskörper fest zusammengehalten wird.

In der Druckschrift "Fachbeiträge" Untersuchung zur Anwendbarkeit des Reibbolzenschweißens (DVS Verlag Düsseldorf, DE, Bd. 46, Nr. 7,1. Juli 1994 (1994-07-01), Seiten 319-324, XP000457270, ISSN: 0036-7184, wird ein Verfahren zum Reibbolzenschweißen beschreiben und zwar in sehr allgemeiner Form, ohne dass dabei besonders auf Einzelheiten der Gestaltung des Reibschweißens unter Reibschweißbewegung näher eingegangen wird, auf die es in diesem Zusammenhang aber entscheidend ankommt und auf die unten näher eingegangen wird (Basis des Oberbegriffs des Anspruchs 1).

Weiterhin existiert die US 3,477,115, die ebenfalls in sehr allgemeiner Weise die Reibschweißverbindung zweier Platten zeigt, ohne dass dabei auf besondere Merkmale einzelner Schritte des Durchdringens der oberen Platte des Heranführens eines Reibschweißbolzens an die andere Platte eingegangen wird, worauf es jedoch in diesem Zusammenhang, entscheidend ankommt.

Mit der vorstehend gekennzeichneten Vorrichtung ist es möglich, einen für den Vorgang des Reibschweißens notwendigen Rotationsvorschub individuell hinsichtlich der jeweiligen Vorschublänge und unter Berücksichtigung des Materials der zu verbindenden Platten einzustellen, das heißt je nach Materialstärke der zu verbindenden Platten den Rotationsvorschub mit einer Schrittlänge wirken zu lassen, die sowohl an die Dicke der zu verbindenden Platten als auch deren Material angepasst ist. Auf diese Weise wird ausgehend von der bekannten Dicke der zu verbindenden Platten unter Berücksichtigung von deren Material die Länge des von dem Rotationsvorschub stufenweise überbrückten Weges bestimmt, den die Vorrichtung abarbeitet und automatisch die gewünschte Verbindung zwischen den Platten über das Verbindungselement herstellt. Der Vorgang der Verbindung wird dabei erfindungsgemäß in drei Stufen eingeteilt, die von einer Ausgangsposition von dem Rotationsvorschub durchlaufen werden, in denen jeweils eine unterschiedliche Behandlung des Materials der Platten über das Verbindungselement erfolgt. Bei der Ausgangsposition handelt es sich darum, dass der Rotationsvorschub zunächst in eine Anfangsstellung dadurch gebracht wird, dass bei Aufsetzen des Verbindungselementes auf die getragene Platte am Rotationsvorschub ein Druckanstieg entsteht, der das Anfangssignal für die folgenden drei Stufen des Vorschubs des Verbindungselementes bildet. Durch die Fähigkeit der Vorrichtung, mit der der Rotationsvorschubeinheit zugeordneten Messeinrichtung die jeweilige Lage des Verbindungselementes anzugeben, kann dann durch Messung des zurückgelegten Vorschubs in den drei aufeinanderfolgenden Stufen das Verbindungselement entsprechend tätig werden, das dann zwangsläufig die von ihm zu durchlaufenden Stufen abarbeitet und damit schließlich einen Reibschweißvorgang zur Verbindung mit der tragenden Platte herbeiführt. Dabei wird die Länge der ersten Stufe so eingestellt, dass diese der Länge des Durchdringens der getragenen Platte entspricht, wonach in der folgenden zweiten Stufe das Reibschweißen des Schaftes mit der tragenden Platte erfolgt, wonach in der dritten Stufe dann unter Druck der Rotationsvorschubeinheit der Reibschweißvorgang dadurch beendet wird, dass das Verbindungselement auf die tragende Platte gestaucht wird.

Damit ist dann der Vorgang des Verbindens der beiden Platten durch Reibschweißens in kontrollierter Gestaltung vollzogen.

Um bei dem vorstehend beschriebenen Vorgang der Einwirkung des Verbindungselementes auf die Platten eine gegebenenfalls auf der tragenden Platte vorhandene Verschmutzung oder Beschichtung zu beseitigen, kann man vorteilhaft zwischen der ersten und der zweiten Stufe in einer Zwischenstufe die Rotationsvorschubeinheit so steuern, dass diese das Verbindungselement mit gegenüber der ersten Stufe veränderter Drehzahl und veränderter Axialkraft dreht, so dass in dieser Zwischenstufe die Oberfläche der tragenden Platte gewissermaßen gereinigt wird, womit das Reibschweißen in der zweiten Stufe entsprechend vorbereitet ist. Die Veränderungen hängen von der Festigkeit der Beschichtungen der tragenden Platte ab.

Die Vorrichtung eignet sich besonders dazu, eine aus Stahl bestehende tragende Platte mit einer von ihr getragenen Platte aus Leichtmetall durch Reibschweißen zu verbinden. Dabei wird in der ersten Stufe die aus Leichtmetall bestehende getragene Platte von dem Verbindungselement, das die getragene Platte in ihrem Bereich erweicht, durchdrungen, um danach die Oberfläche der tragenden Platte anzuschmelzen und damit den Reibschweißvorgang zwischen dem Verbindungselement und der tragenden Platte vorzubereiten.

Zweckmäßig gestaltet man in diesem Falle das Verbindungselement ebenfalls aus Stahl. Es ist aber auch möglich, sowohl die Platten als auch das Verbindungselement aus Kunststoff zu fertigen. Das Verbindungselement wird von der Rotationsvorschubeinheit in der ersten Stufe derart betätigt, dass ein Vorschub des Verbindungselementes in der ersten Stufe über die Dicke der getragenen Platte erfolgt, wobei eine Drehzahl eingestellt ist, bei der aufgrund von entstehender Reibungserwärmung das Material der getragenen Platte im Bereich des Verbindungselementes fließt.

Die Rotationsvorschubeinrichtung dreht dann in der zweiten Stufe das Verbindungselement mit gegenüber der ersten Stufe verringerter Drehzahl und erhöhter Axialkraft, so dass dabei die getragene Platte anschmilzt.

Um dann in der dritten Stufe die Reibschweißverbindung zwischen dem Verbindungselement und der tragenden Platte zu vollenden, wird zweckmäßig in der dritten Stufe die Rotation des Rotationsvorschubs auf Null eingestellt, wobei die Rotationsvorschubeinheit unter Druck auf das Verbindungselement dessen Stauchung gegen die tragende Platte bewirkt, womit das Verbindungselement und die angeschmolzene Oberfläche der tragenden Platte sich unter dem ausgeübten Axialdruck fest miteinander verbinden.

In den Figuren ist ein Ausführungsbeispiel der Erfindung dargestellt. Es zeigen:
- Fig. 1: die Gesamtvorrichtung mit Rotationsvorschubeinheit und Messeinrichtung,
- Fig. 2: die Vorrichtung mit zwei miteinander zu verbindenden Platten und einem auf die tragende Platte aufgesetzten Verbindungselement,
- Fig. 3: die gleiche Gestaltung, wie in Figur 2 dargestellt, jedoch mit in die tragende Platte eingedrungenem Verbindungselement (Stufe 1),
- Fig 4: die Gestaltung ähnlich der Figur 3, jedoch mit abgeriebenem Konus an der vorderen Seite des Verbindungselementes (Zwischenstufe),
- Fig. 5: die gleiche Gestaltung, wie in Figur 4 dargestellt, jedoch mit einer Reibschweißverbindung zwischen dem Verbindungselement und der tragenden Platte (Stufe 2),
- Fig. 6: die gleiche Gestaltung, wie in den vorherigen Figuren dargestellt, als fertiger Mehrkörperverbund.

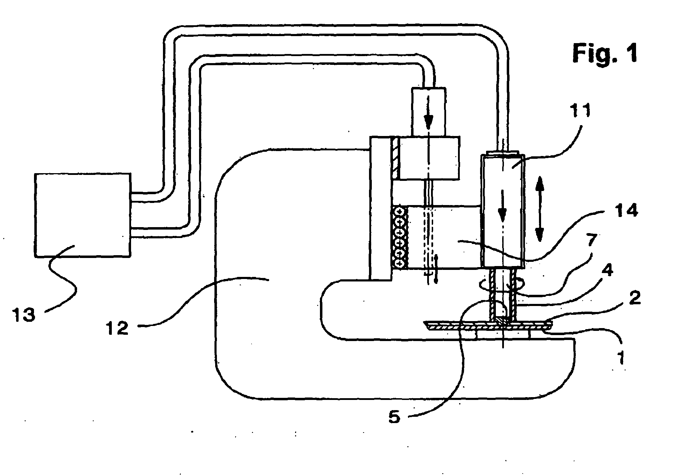

In der Figur 1 ist in prinzipieller Darstellungsweise die erfindungsgemäße Vorrichtung wiedergegeben, die der Gestaltung einer Vorrichtung zum Reibschweißen von Bauteilen gemäß DE 10 2004 034 498 A1 folgt. Die erfindungsgemäße Vorrichtung weist die Steuerung 13 auf, von der ausgehend die mechanischen Teile der Vorrichtung, also insbesondere die Rotationsvorschubeinheit 11, gesteuert werden, die gegenüber einem feststehenden Rahmen 12 in ihrer Längsrichtung verschiebbar angeordnet ist. Die Rotationsvorschubeinheit 11 weist den Stößel 7 auf, der an seinem unteren Ende jeweils ein Verbindungselement 5 erfasst und unter axialem Druck in Drehung versetzt wird. Der Niederhalter 4 sorgt dafür, dass die miteinander zu verbindenden Platten, nämlich die tragende Platte 1 und die getragene Platte 2 fest aneinander liegen, während das Verbindungselement 5 unter Drehung und Druck auf die getragene Platte 2 aufgesetzt ist. Die jeweilige Lage des Stößels 7 und damit des Verbindungselementes 5 gibt die Messeinrichtung 14 an.

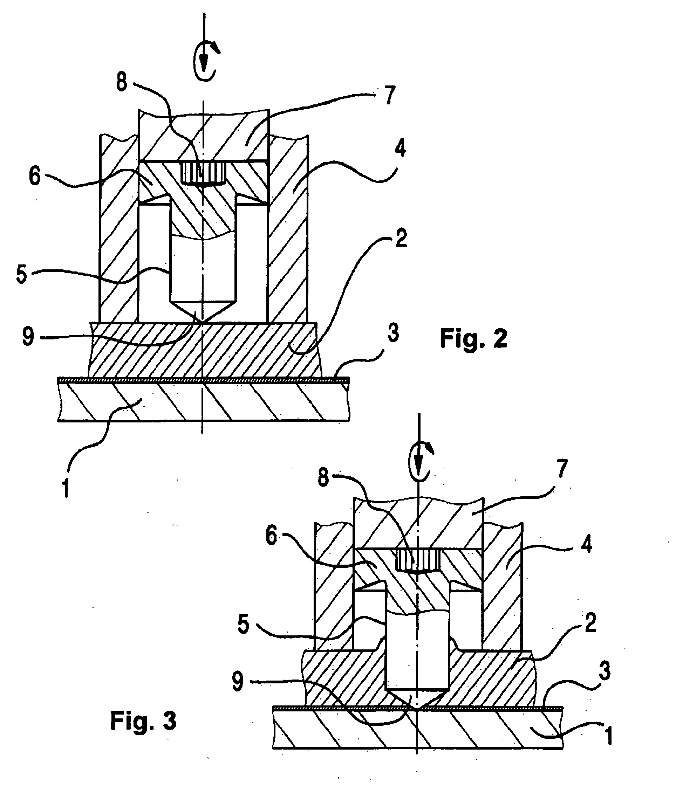

In der Figur 2 sind eine tragende Platte 1 und eine darauf liegende getragenen Platte 2 dargestellt, die miteinander zu verbinden sind. Die Platte 1 besteht zum Beispiel aus Stahl, die Platte 2 aus einem Leichtmetall, zum Beispiel Aluminium. Zwischen den Platten 1 und 2 ist eine Schicht 3 eingezeichnet, durch die eine auf die tragende Platte 1 aufgebrachte Schutzschicht bzw. eine Schicht aus Verunreinigungen und/oder Klebstoff dargestellt ist. Auf die getragene Platte 2 ist die Vorrichtung zum Verbinden der beiden Platten 1 und 2 aufgesetzt, und zwar durch den Niederhalter 4, der auf die getragene Platte 2 drückt und damit diese gegen die tragende Platte 1 presst, die, was nicht dargestellt ist, in irgendeiner Weise auf einer Unterlage ruht. In dem Niederhalter 4 wird das Verbindungselement 5 geführt, das an seinem der Platte 2 abgewandten Ende einen Bund 6 aufweist, auf dessen Bedeutung weiter unten näher eingegangen wird. Auf den Bund 6 drückt der nur schematisch dargestellte Stößel 7 einer Vorrichtung zum Verbinden von zwei Platten mittels Reibschweißen (siehe zum Beispiel Fig. 1), wobei durch die Torxausnehmung 8 und einem entsprechenden aus dem Stößel 7 herausragenden Eingriff ein Drehmoment von dem sich drehenden Stößel 7 auf das Verbindungselement 5 ausgeübt werden kann.

Insoweit handelt es um eine bekannte Anordnung.

Das Verbindungselement 5 ist in Fig. 2 in einer Lage dargestellt, in der seine Spitze 9 gerade auf der getragenen Platte 2 aufsitzt. Dieses Aufsitzen wird, gemäß der Erfindung von einer mit der Vorrichtung zusammenarbeitenden, in Fig. 1 dargestellten Messeinrichtung 14 erkannt, und zwar durch plötzliches Festhalten des Verbindungselementes 5 bei seinem Heranbringen an die getragene Platte 2, was als Signal ausgenutzt wird, damit in der Vorrichtung automatisch eine Rotationsvorschubeinheit 11 anzutreiben, die den Stempel 7 in Drehung versetzt und nunmehr unter Druck auf das Verbindungselement 5 dieses in die getragene Platte 2 eindrückt. Bei diesem Vorgang entsteht aufgrund der Rotation des Stempels 2 und dem mitgenommenen Verbindungselement 5 eine starke Reibung an der Spitze des Verbindungselementes 5, die zu einer schnellen erheblichen Erhitzung des Materials des Verbindungselementes 5 im Bereich von dessen Spitze führt, so dass dadurch das Material der getragenen Platte 2 erweicht wird und damit die Spitze 9 des Verbindungselementes 5 in das weich gewordene Material der getragenen Platte 2 eindringt (siehe Fig. 3). Damit wird ein nunmehr folgender Reibschweißvorgang zwischen dem Verbindungselement 5 und der tragenden Platte 1 eingeleitet.

Wenn die tragende Platte entweder mit einer Schutzschicht, mit einer Schmutzschicht und/oder Klebstoff versehen ist, was häufig nicht vermieden werden kann, so ergibt sich nach dem Vorgang des Durchdringens der getragenen Platte 2 eine Reinigung der tragenden Platte 1 insofern, als diese von ihrer Schutzschicht bzw. Schmutzschicht befreit wird, so dass sich die Materialien von der getragenen Platte 2 und der tragenden Platte 1 in dem Bereich vor der Spitze 9 des Verbindungselementes 5 miteinander verbinden können und somit eine Reibschweißverbindung erstellt werden kann.

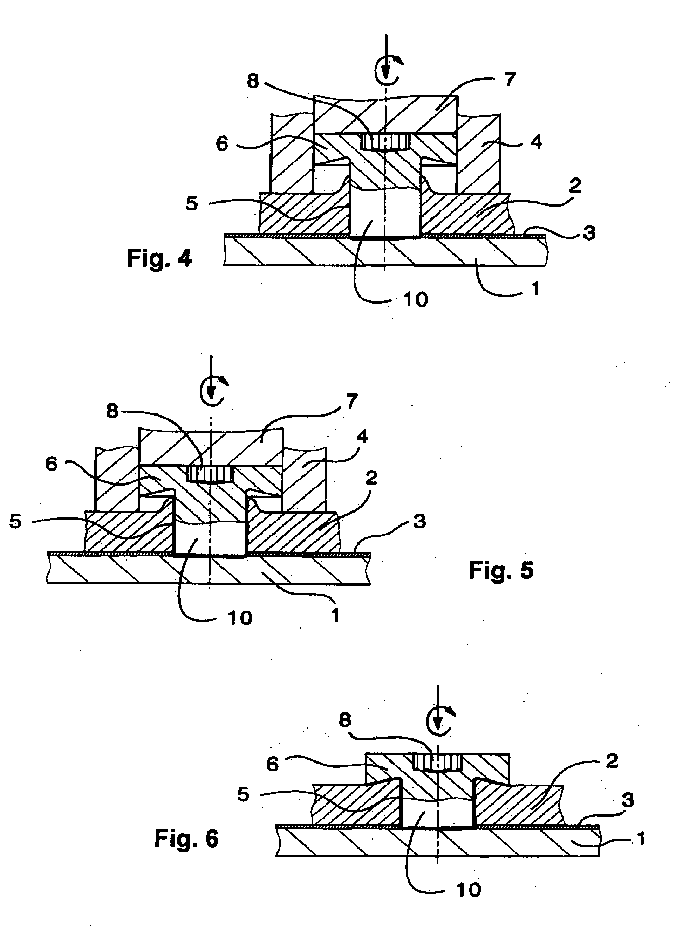

Die in der Figur 4 dargestellte Gestaltung als Zwischenstufe zeigt das Verbindungselement 5 mit durch die Rotation des Verbindungselementes 5 abgetragener Spitze 9, was dazu führt, dass das Verbindungselement 5 mit seinem Schaft 10 auf die tragende Platte 1 aufsitzen kann.

Von der Messeinrichtung 14 (siehe Fig. 1), die mit der Rotationsvorschubeinheit 11 in Verbindung steht, wird mit Erreichen der Stufen des Verbindungselementes 5, wie diese in den Fig. 2 bis 6 dargestellt sind, signalisiert, dass nunmehr zur Herstellung einer festen Reibschweißverbindung auf das Verbindungselement bei dessen Stillstand ein erheblicher Druck ausgeübt werden kann, womit sich dessen Stirnseite mit der tragenden Platte 1 materialmäßig verbindet und somit durch Reibschweißen das Verbindungselement 5 mit der tragenden Platte 1 verbunden ist, wie dies in Fig. 5 dargestellt ist.

Es kann nunmehr die Vorrichtung zum Verbinden der betreffenden Teile von der Platte 2 weggezogen werden, wobei der Bund 6 am Verbindungselement 5 dafür sorgt, dass die getragene Platte 2 weiterhin gegen die tragende Platte 1 gedrückt wird. Die endgültige Position ist in Fig. 6 dargestellt.

## Patentansprüche

1. Vorrichtung zum Verbinden von mindestens zwei Platten (1, 2), von denen eine tragende Platte (1) eine höhere Festigkeit als eine darauf liegende, getragene Platte (2) aufweist, mittels eines von einer Rotationsvorschubeinheit (11) in Drehung versetzten Verbindungselementes (5), das mit einem Bund (6) die getragene Platte (2) an die tragende Platte (1) drückt und mit einem Schaft (10) eine Reibschweißverbindung zu der tragenden Platte (1) herstellt, **dadurch gekennzeichnet dass** die Rotationsvorschubeinheit (11) mit einer Messeinrichtung (14) versehen ist, die sowohl eine von der Rotationsvorschubeinheit (11) ausgeübte Axialkraft als auch eine jeweilige Vorschublänge misst, wobei bei Aufsetzen des Schaftes des Verbindungselementes (5) auf die getragene Platte (2) automatisch die Rotationsvorschubeinheit (II) in Drehung versetzt wird , und wobei die Messeinrichtung (14) den dabei auftretenden Druckanstieg signalisiert, der damit die Rotationsvorschubeinheit (11), deren Vorschub auf mindestens drei aufeinander folgende Verbindungsstufen einstellbar ist, fortschaltet, wobei die erste Stufe auf das Durchdringen der getragenen Platte (2), die zweite Stufe auf das Reibschweißen des Schaftes (10) mit der tragenden Platte (1) eingestellt ist und die dritte Stufe den Reibschweißvorgang durch eine Erhöhung der Axialkraft des Verbindungselementes (5) auf die tragende Platte (1) beendet.

2. Vorrichtung nach Patentanspruch 1, **dadurch gekennzeichnet dass** zwischen der ersten und zweiten Stufe in einer Zwischenstufe die Rotationsvorschubeinheit (11) mit gegenüber der ersten Stufe veränderter Drehzahl und veränderter Axialkraft dreht.

3. Vorrichtung zum Verbinden von mindestens zwei Platten (1, 2) nach Anspruch 1, **dadurch gekennzeichnet, dass** die tragende Platte (1) aus Stahl besteht.

4. Vorrichtung zum Verbinden von mindestens zwei Platten (1, 2) nach Anspruch 1, **dadurch gekennzeichnet, dass** die getragene Platte (2) aus einem Leichtmetall besteht.

5. Vorrichtung zum Verbinden von mindestens zwei Platten (1, 2) nach Anspruch 1, **dadurch gekennzeichnet, dass** das Verbindungseiement (5) aus Stahl besteht.

6. Vorrichtung zum Verbinden von mindestens zwei Platten (1, 2) nach Anspruch 1, **dadurch gekennzeichnet, dass** das Verbindungselement (5) aus Aluminium besteht.

7. Vorrichtung zum Verbinden von mindestens zwei Platten (1, 2) nach Anspruch 1, **dadurch gekennzeichnet, dass** die Platten und das Verbindungselement aus Kunststoff bestehen.

8. Vorrichtung nach einem der vorangehenden Ansprüche, **dadurch gekennzeichnet, dass** die Rotationsvorschubeinheit (11) in der ersten Stufe auf die Dicke der getragenen Platte (2) mit einer Drehzahl und Axialkraft eingestellt ist, bei der das Material der getragenen Platte (2) im Bereich des Verbindungselementes (5) fließt.

9. Vorrichtung nach einem der vorangehenden Ansprüche, **dadurch gekennzeichnet, dass** die Rotationsvorschubeinheit (11) in der zweiten Stufe mit gegenüber der ersten Stufe verringerter Drehzahl und erhöhter Axialkraft dreht.

10. Vorrichtung nach einem der vorangehenden Ansprüche, **dadurch gekennzeichnet, dass** in der dritten Stufe die Rotation des Rotationsvorschubs auf 0 eingestellt ist und die Rotationsvorschubeinheit (11) unter Druck auf das Verbindungselement (5) dessen Stauchung gegen die tragende Platte (1) bewirkt.

## Claims

1. An apparatus for connecting at least two plates (1, 2), of which a supporting plate (1) has a higher strength than a supported plate (2) located on top of the supporting plate, by means of a connecting element (5) which is made to rotate by a rotational feeder unit (11), said connecting element (5) having a collar (6) which presses the supported plate (2) onto the supporting plate (1) and having a shaft (10) through which a friction welded connection to the supporting plate (1) is produced **characterized in that** the rotational feeder unit (11) comprises a measurement device (14) which measures an axial force exerted by the rotational feeder unit (11) and a respective feeding distance, wherein the rotational feeder unit (11) is automatically rotated once the shaft of the connecting element (5) contacts the supported plate (2), and wherein the measurement device (14) signals an increase in pressure encountered therein which, thereby, causes the rotational feeder unit (11) to advance to the next stage, whose feed motion can be set to at least three sequential connecting stages, wherein the first stage is set to the penetration of the supported plate (2), the second stage is set to the friction welding of the shaft (10) to the supporting plate (1), and the third stage finalizes the friction welding process by increasing the axial force of the shaft of the connecting element (5) to the supporting plate (1).

2. The apparatus according to claim 1 **characterized in that** between the first and the second stage, the rotational feeder unit (11) rotates, in an intermediate stage, with a different rotational speed and a different axial force as compared to the first stage.

3. The apparatus for connecting at least two plates (1, 2) according to claim 1 **characterized in that** the supporting plate (1) consists of steel.

4. The apparatus for connecting at least two plates (1, 2) according to claim 1 **characterized in that** the supported plate (2) consists of light metal.

5. The apparatus for connecting at least two plates (1, 2) according to claim 1 **characterized in that** the connecting element (5) consists of steel.

6. The apparatus for connecting at least two plates (1, 2) according to claim 1 **characterized in that** the connecting element (5) consists of aluminium.

7. The apparatus for connecting at least two plates (1, 2) according to claim 1 **characterized in that** the plates and the connecting element consist of plastic material.

8. The apparatus according to one of the preceding claims **characterized in that** in the first stage, a rotational speed and an axial force of the rotational feeder unit (11) are adjusted and set based on a thickness of the supported plate (2) in order to cause material of the supported plate (2) in an area of the connecting element (5) to flow.

9. The apparatus according to one of the preceding claims **characterized in that** in the second stage, the rotational feeder unit (11) rotates with a lower rotational speed and a higher axial force as compared to the rotational speed and the axial force of the first stage.

10. The apparatus according to one of the preceding claims **characterized in that** in the third stage, the rotational speed of the rotational feeder unit (11) is adjusted to zero and the rotational feeder unit (11) exerts a pressure onto the connecting element (5) to cause it to be compressed against the supporting plate (1).

## Revendications

1. Dispositif pour joindre au moins deux plaques (1, 2), dont une plaque porteuse (1) présentant une plus grande résistance qu'une plaque portée (2) se trouvant sur la première, au moyen d'un élément de connexion qui, entraîné dans un mouvement rotatif par un appareil d'avancement à rotation (11), pousse la plaque portée (1) sur la plaque porteuse (2) à l'aide d'un épaulement (6) et engendre une soudure par friction sur la plaque porteuse (1) grâce à un arbre (10), **caractérisé en ce que** l'unité d'avancement à rotation (11) est pourvue d'un dispositif de mesure (14) qui mesure tant une force axiale exercée par l'unité d'avancement à rotation (11) qu'une longueur d'avancement correspondante, un mouvement de rotation étant engendré lorsque l'arbre de l'élément de connexion (5) est placé sur la plaque portée (2), le dispositif de mesure (14) signalisant l'accumulation de pression survenant à ce moment et démarrant automatiquement l'unité d'avancement à rotation (11), dont l'avancement peut être réglé au moyen d'au moins trois étapes de connexion consécutives, la première étape étant réglée pour le perçage de la plaque portée (2), la deuxième pour la soudure par friction de l'arbre (10) avec la plaque porteuse (1) et la troisième terminant le processus de soudure par friction en augmentant la force axiale de l'élément de connexion (5) sur la plaque porteuse (1).

2. Dispositif selon la revendication 1, **caractérisé en ce que**, à une étape intermédiaire entre la première et la deuxième, l'unité d'avancement à rotation (11) pivote à une vitesse de rotation et une force axiale modifiées par rapport à la première étape.

3. Dispositif pour joindre au moins deux plaques (1, 2) selon la revendication 1, **caractérisé en ce que** la plaque porteuse (1) est en acier.

4. Dispositif pour joindre au moins deux plaques (1, 2) selon la revendication 1, **caractérisé en ce que** la plaque portée (2) est en métal léger.

5. Dispositif pour joindre au moins deux plaques (1, 2) selon la revendication 1, **caractérisé en ce que** l'élément de connexion (5) est en acier.

6. Dispositif pour joindre au moins deux plaques (1, 2) selon la revendication 1, **caractérisé en ce que** l'élément de connexion (5) est en aluminium.

7. Dispositif pour joindre au moins deux plaques (1, 2) selon la revendication 1, **caractérisé en ce que** les plaques et l'élément de connexion sont en plastique.

8. Dispositif selon l'une des revendications précédentes, **caractérisé en ce que** l'unité d'avancement à rotation (11) est réglée à la première étape en fonction de la largeur de la plaque portée (2) avec une vitesse de rotation et une force axiale auxquelles le matériau de la plaque portée (2) circule dans l'espace de l'élément de connexion (5).

9. Dispositif selon l'une des revendications précédentes, **caractérisée en ce que** l'unité d'avancement à rotation (11) pivote à la deuxième étape à une vitesse réduite et une force axiale augmentée par rapport à la première étape.

10. Dispositif selon l'une des revendications précédentes, **caractérisée en ce que**, à la troisième étape, la rotation de l'avancement rotatif est réglée à 0 et l'unité d'avancement à rotation (11) fonctionne sous la pression sur l'élément de connexion (5), dont l'écrasement s'opère contre la plaque porteuse (1).
